# EUROPEAN PATENT APPLICATION

(11) **EP 1 069 497 A2**
(43) Date of publication of application: **17.01.2001**
(21) Application number: 00305779.1
(22) Date of filing: 07.07.2000
(51) Int. Cl.: G06F 7/58

(54) **Pseudo-random data generator and scrambler using the same**

(30) Priority: 10.07.1999 KR 9927886
(71) Applicant: SAMSUNG ELECTRONICS CO., LTD., Suwon-City, Kyungki-do (KR)
(72) Inventor: Shim, Jae-seong, Kwangjin-gu, Seoul (KR)
(74) Representative: Chugg, David John

(57) **Abstract**

A random data generator and a scrambler using the same are provided. The random data generator includes a m×n decoder (100) for receiving m bits and outputting n bits, registers (r₀-rₙ₋₁) arranged in series for shifting and storing the n bits, and selection output circuits (m₀-mₙ₋₁) for receiving n bits of output from the m×n decoder (100) as selection signals, and providing "0" with respect to valid bits among the n bits of output from the m×n decoder (100) and providing the outputs of the registers (r₀-rₙ₋₁) with respect to invalid bits. The random data generator also includes logic circuits (G₀-Gₙ₋₁) for performing XOR operations with respect to the n bits of output from the selection output circuits (m₀-mₙ₋₁) and the n bits of output from the registers (r₀-rₙ₋₁), and feeding the results of the XOR operations back to a least significant register (r₀) only in the case of valid bits among the n bits of output from the m×n decoder (100). Accordingly, random data having a cycle of 64K or greater can be generated, and a random data generator for 2^{m}×64K can be realized with the m×n decoder.

## Description

The present invention relates to the field of data randomization, and more particularly, to a random data generator suitable for a high density optical disc system, and a scrambler using the random data generator.

Random data generators, which are devices for converting the data of a particular input value into a random number, are being applied to scramblers of optical disc systems using optical discs such as a compact disc read only memory (CD-ROM) or a digital versatile disc (DVD).

Data scrambling is generally used to secure data from users having no keys, and is a type of randomization which is being widely used for the purpose of secure communications.

The first essential reason for an optical disc system to scramble received data is to smoothly perform tracking control using differential phase detection (DPD). If the same data is received and thus the same modulated codes are recorded an adjacent tacks of a disc, a DPD signal is not detected upon reproduction, so that a servo unit cannot perform tracking control. For example, in the case of a CD-Audio which is not scrambled, the control of DPD is difficult in sections between tunes (that is, sections where every data is "00h").

The second reason is to reduce the burden of DC suppression control, which is performed by a modulator. In the case where identical data is continuously received, digital sum value (DSV) control itself may be impossible with respect to particular values. Hence, data randomization is needed to prevent such a worst case. Here, DSV is a parameter predicting the DC direction of a codeword stream, and a modulated codeword preferably has the code characteristics that a codeword is converged on a DC.

The third reason is to protect particular data. In the case of a CD-ROM, only the remaining data except for a sync is scrambled to protect a sync pattern (00h, FFh, FFh, ... , FFh, 00h) within data.

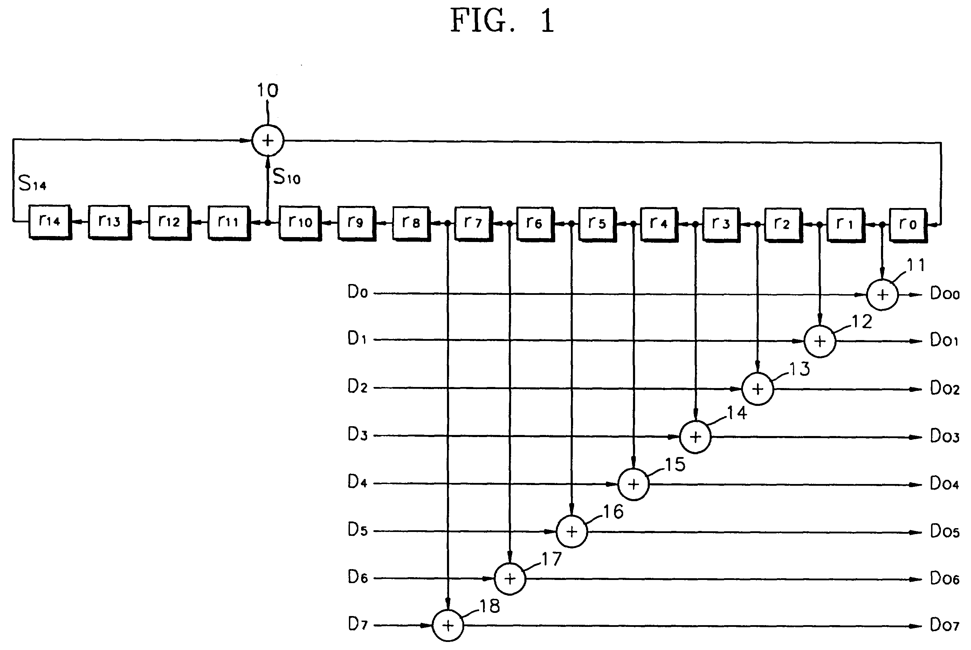

Figure 1 is a circuit diagram of a random data generator which is used in a scrambler of a general DVD system, wherein an exclusive OR gate 10 and registers r₀ through r₁₄ for providing random data are referred to as a random data generator, and the random data generator and exclusive OR gates 11 through 18 are referred to as a scrambler.

In Figure 1, though not shown, 15 bit registers r₀ through r₁₄ are shifted left in synchronization with the input of a clock signal to be scrambled. The input of the least significant register r₀ is a value obtained by performing an exclusive OR operation with respect to the outputs of the most significant register r₁₄ and the eleventh least significant register r₁₀ which are provided from the eXclusive OR (XOR) gate 10.

The random data generation cycle in the random data generator shown in Figure 1 is 32K (kilobytes), and is consistent with the size of one Error Correction Code (ECC) block of a DVD, 32K. That is, in the ECC block, a random value having no periodicity is generated, a register is shifted left eight times, and then the XOR gates 11 through 18 perform XOR operations with respect to the outputs of eight lower registers r₀ through r₇ and input data D₀ through D₇, whereby scrambled results are obtained. Here, though not shown, a data clock speed at which a data clock signal is input to the XOR gates 11 through 18 is 1/8 of a scramble clock speed at which a scramble clock signal is input to the registers r₀ through r₁₄.

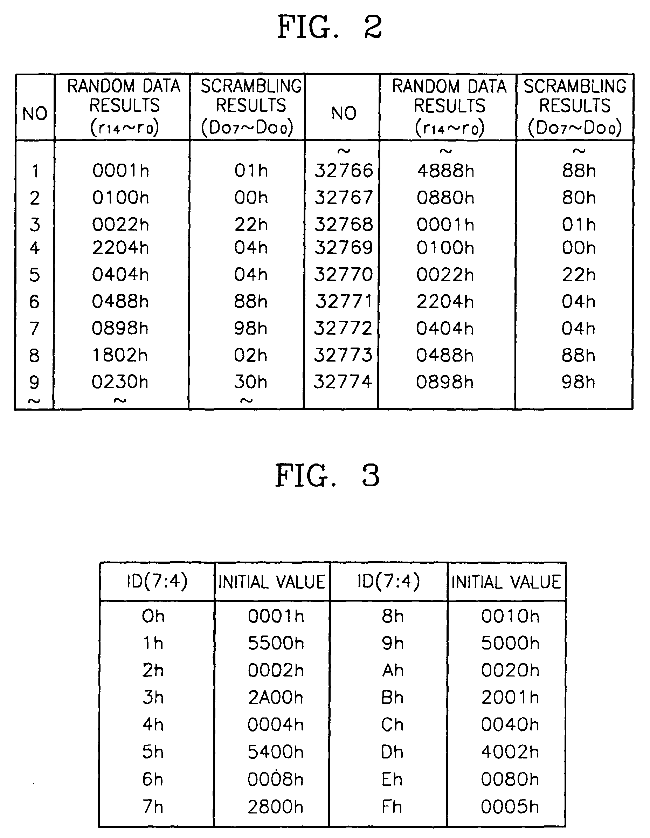

Figure 2 is a table for showing the random data results of the registers r₀ through r₁₄ and scrambling results Do₀ through Do₇ when the initial values of the registers r₀ through r₁₄ shown in Figure 1 are set to be a hexadecimal number of "0001h" and input data D₀ through D₇ are "00h". It can be seen from Figure 2 that the cycle of random data is 32K (32768).

Here, the values of the registers r₀ through r₁₄ are shifted left eight times, and then scrambling is performed. Accordingly, the registers r₀ through r₁₄ are initialized to initial values with reference to the four upper bits ID(7:4) within the last byte among a 4-byte identification code (ID) allocated to the head of a sector, which is a basic access unit. At this time, attention must be paid to select the initial values. That is, even if the same data is received, random data is generated from an initialized value within one sector, and values within the sector are equally repeated for a duration of 1 ECC block (16 sectors).

As shown in Figure 3, the initial value of the registers r₀ through r₁₄ includes the first initial value "000h" and values 0002h, 0004h, 0008h, 0010h, 0020h, 0040h and 0080h obtained by shifting the value "0001h" left seven times, the value "5500h" of registers r₀ through r₁₄ after a capacity of at least 16K (=2K×8) is required to return the 7 shifted values, and values 2A00h, 5400h, 2800h, 5000h, 2001h, 4002h and 0005h obtained by shifting the value "5500h" left up to seven times.

However, a conventional random data generator and a scrambler using the same cannot cope with when generation and scrambling of random data having a cycle greater than 32K are required.

With a view to solve or reduce the above problem, it is an aim of embodiments of the present invention is to provide a random data generator having a serial structure, which can generate a large amount of data as random data.

Another aim of embodiments is to provide a scrambler of a high-density optical disc system employing the random data generator having a serial structure.

Still another aim of embodiments is to provide a random data generator having a parallel structure, which can generate a large amount of data as random data.

Yet another aim is to provide a scrambler of a high-density optical disc system employing the random data generator having a parallel structure.

According to a first aspect of the present invention, there is provided a random data generator comprising: an m×n decoder for receiving m bits and outputting n bits; registers (r₀-rₙ₋₁) arranged in series for shifting and storing the n bits; selection output circuits (m₀-mₙ₋₁) for receiving n bits of output from the m×n decoder as selection signals, and providing "0" with respect to valid bits among the n bits of output from the m×n decoder and providing the outputs of the registers (r₀-rₙ₋₁)with respect to invalid bits; and logic circuits (G₀-Gₙ₋₁) for performing XOR operations with respect to the n bits of output from the selection output circuits (m₀-mₙ₋₁) and the n bits of output from the registers (r₀-rₙ₋₁), and feeding the results of the XOR operations back to a least significant register (r₀) only in the case of valid bits among the n bits of output from the m×n decoder, wherein n bits of random data are generated from the registers (r₀-rₙ₋₁).

Preferably, the m×n decoder outputs 2^{m} types of n bits with respect to the m input bits, thereby extending the cycle of the random data to 2^{m} times.

Preferably, when n in the m×n decoder is set to be 16 and a predetermined branch value is selected, the cycle of the random data becomes 2¹⁶ (=64K).

Preferably, when m-bit selection signals are received and n is set to be 16, the m×n decoder becomes a m×16 decoder, and the cycle of the random data is 2^{m}×64K.

The m×n decoder may be a 3×8 decoder, and the cycle of random data is 8×64K.

The m×n decoder may be a 1×2 decoder, and the cycle of random data is 2×64K.

The number of effective branches of the outputs of the m×n decoder is preferably 4 or more.

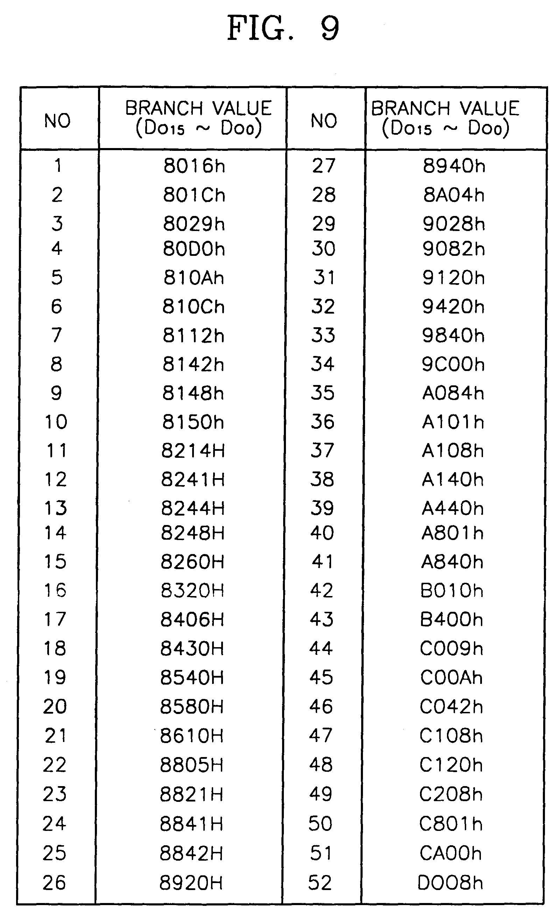

Preferably, when the number decoder is a 3X8 decoder having outputs (Dₒ₀-D₀₁₅) and four effective branches, the branch values related to the decoder outputs are as given in Figure 9 of the accompanying drawings.

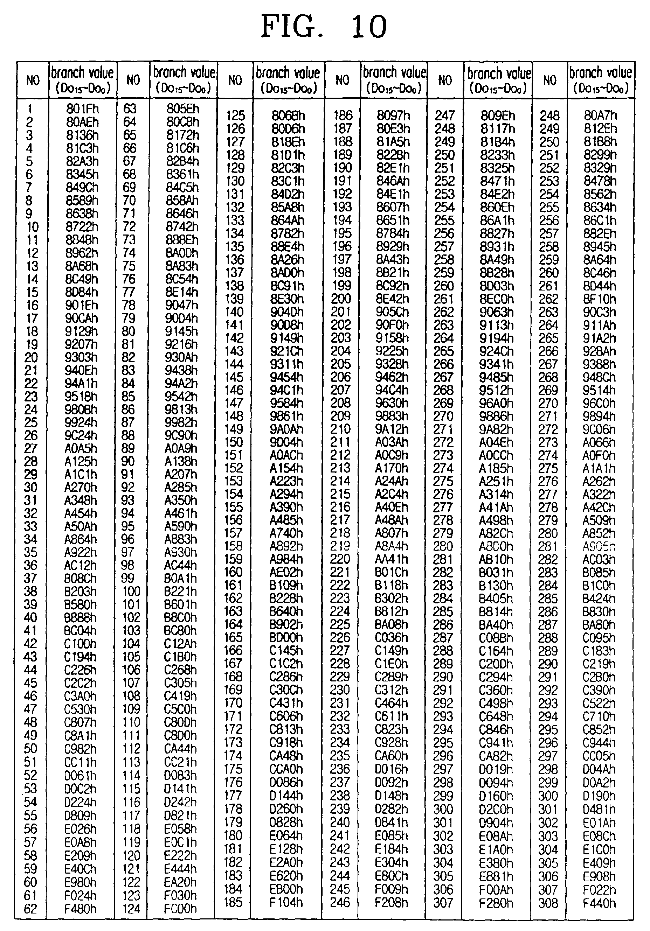

When the decoder is a 3x8 decoder having outputs (Dₒ₀-Dₒ₁₅) and six effective branches the branch values related to the decoder outputs are preferably as given in Figure 10.

The random data generator may be applied to a scrambler of an optical disc system, and the scrambler preferably comprises a random data generator and a predetermined number of logic gates for performing XOR operations with respect to input data and the outputs of as many lower registers as the predetermined number of logic gates to provide scrambling results.

According to another aspect of the invention, there is provided a random data generator comprising: n registers (r₀-rₙ₋₁) arranged in series for shifting and storing n bits; logic circuits (G₀-Gₙ₋₁) arranged in series, which are realized with a plurality of logic gates, for performing XOR operations with respect to the outputs of the registers (r₀-rₙ₋₁), which are valid corresponding to the number of logic gates having effective branches according to a predetermined branch value, and the outputs of adjacent logic gates, and feeding the results of the XOR operation back to a least significant register (r₀), wherein n bits of random data are generated from the registers.

The number of effective branches is preferably 4 or more, and determined by the branch values shown in Figures 9 and 10.

Preferably, when n is set to be 16, the cycle of the random data becomes 2¹⁶ (=64K).

Preferably, the random data generator is applied to a scrambler of an optical disc system, and the scrambler comprises a random data generator and a predetermined number of logic gates for performing XOR operations with respect to input data and the outputs of as many lower registers as the predetermined number of logic gates to provide scrambling results.

In another aspect, there is provided a random data generator comprising: p logic circuits arranged in parallel, for receiving the outputs of n registers in parallel, performing XOR operations with respect to the outputs of the n registers which correspond to the results of n left-shifting operations having correspondence to the number of effective branches according to a predetermined branch value, and providing 2^{m} outputs; selection output circuits (m₀-m₇), each for selecting one output among 2^{m} outputs provided from each of the logic circuits according to m-bit selection signals, and providing p outputs; and n registers (S₀-S₇) arranged in parallel for generating random data, wherein (n-p) upper registers receive the outputs of p lower registers and the p lower registers receive the p outputs of the selection output circuit, wherein the outputs of registers (S₀-S₇) corresponding to the number of effective branches having a predetermined branch value are fed back to the logic circuit.

Preferably, the cycle of random data provided from the registers is extended to 2^{m} times.

When m-bit selection signals are received and n is set to be 16, the cycle of random data provided from the registers preferably becomes 2^{m}×64K.

Preferably, the inputs (Sₒ₀-Sₒ₁₅) of the p lower registers correspond to the values (Dₒ₀-Dₒ₁₅) and have branch values as shown in Figure 9.

Preferably, the inputs (Sₒ₀-Sₒ₁₅) of the p lower registers correspond to the values (Dₒ₀-Dₒ₁₅) and have branch values shown in the Figure 10 table.

Preferably, the logic circuits are 8×2³ XOR gates, and the selection output circuits select 8 outputs provided from the logic circuits using 3 bit selection signals and provide the selected data to 8 lower registers, while the remaining upper registers receive the outputs of the 8 lower registers.

Preferably, the random data generator is applied to a scrambler of an optical disc system, and the scrambler comprises a random data generator and a predetermined number of logic gates for performing XOR operations with respect to input data and the outputs of as many lower registers as the predetermined number of logic gates to provide scrambling results.

For a better understanding of the invention, and to show how embodiments of the same may be carried into effect, reference will now be made, by way of example, to the accompanying diagrammatic drawings in which:
Figure 1 is a circuit diagram of a random data generator used in a scrambler for a general digital versatile disc (DVD) system;
Figure 2 is a table showing the results of random data generated by the random data generator shown in Figure 1, and scrambling results when input data is "0";
Figure 3 is a table showing initial values used in the registers shown in Figure 1;
Figure 4 is a circuit diagram of a random data generator having a serial structure according to an embodiment of the present invention and a scrambler using the random data generator;
Figure 5 is a circuit diagram of an embodiment of the random data generator and the scrambler using the same shown in Figure 4;
Figure 6 is a table showing the inputs/outputs of the 3×8 decoder shown in Figure 5;
Figure 7 is a circuit diagram of a random data generator and a scrambler using the same when the output of the 3×8 decoder shown in Figure 5 is, for example, "CA00h";
Figure 8 is a table showing the results of random data generated by the random data generator shown in Figure 7, and the results of scrambling of input data "00h";
Figure 9 is a table showing the outputs of a 3×8 decoder in all possible cases when the cycle of random data is 64K in the random data generator shown in Figure 5, and the number of effective branches is four;
Figure 10 is a table showing the outputs of a 3×8 decoder in all possible cases when the cycle of random data is 64K in the random data generator shown in Figure 5, and the number of effective branches is six;
Figure 11 is a circuit diagram of another embodiment of the random data generator shown in Figure 4 and a scrambler using the random data generator;
Figure 12 is a table showing an example of the 1×2 decoder shown in Figure 11;
Figure 13 is a table showing the results of random data when the output of the 1×2 decoder shown in Figure 11 is "B400h", and the results of scrambling of input data "00h";
Figure 14 is a table showing the results of random data when "B400h" and "CA00h" are used as the outputs of the 1×2 decoder shown in Figure 11, and the results of scrambling of input data "00h";
Figure 15 is a circuit diagram of a random data generator having a parallel structure according to the present invention and a scrambler using the random data generator; and
Figure 16 is a circuit diagram of an embodiment of the random data generator and the scrambler using the same shown in Figure 15.

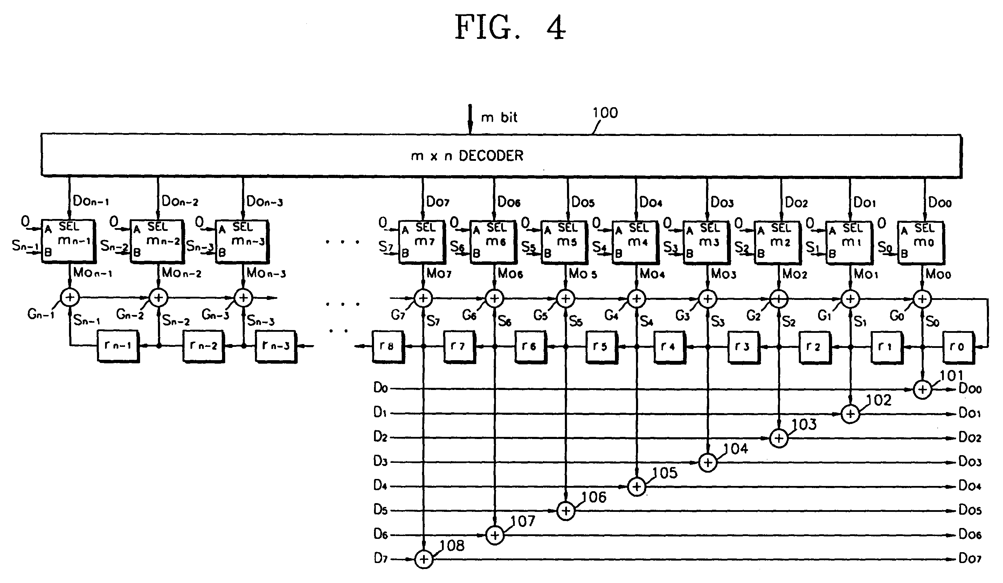

Figure 4 is a circuit diagram of a random data generator having a serial structure according to the present invention and a scrambler using the random data generator. Here, the random data generator includes an m×n decoder 100, n multiplexers m₀ through mₙ₋₁, n XOR gates G₀ through Gₙ₋₁, and n registers r₀ through rₙ₋₁, and the scrambler includes the random data generator having such a configuration and XOR gates 101 through 108 for performing XOR operations with respect to input data D₀ through D₇ and the outputs of registers r₀ through r₇ to output the results of scrambling. The n multiplexers can be referred to as selection output circuits for selecting and outputting either "0" or the output of each register in response to the n-bit output of the m×n decoder 100, and the n XOR gates can be referred to as logic circuits for providing the n-bit results of XOR operations.

In Figure 4, the m×n decoder 100 receives m bits and outputs n bits. The n multiplexers m₀ through mₙ₋₁ receive n output bits Do₀ through Doₙ₋₁ as selection signals from the m×n decoder 100, and provide "0", received via a first input port A, as output signals Mo₀ through Moₙ₋₁ to one side of each of the XOR gates G₀ through Gₙ₋₁ when the values of the n-bit outputs Do₀ through Doₙ₋₁ of the m×n decoder 100 are "1". At this time, the XOR gates G₀ through Gₙ₋₁ output the outputs S₀ through Sₙ₋₁ of the registers r₀ through rₙ₋₁ received via the other sides thereof, without change, and finally the output of an accumulated XOR gate G₀ is fed back to the least significant register r₀.

Also, the n multiplexers m₀ through mₙ₋₁ provide the outputs S₀ through Sₙ₋₁ of the registers r₀ through rₙ₋₁, received via the second input port B, as output signals Mo₀ through Moₙ₋₁ to the XOR gates G₀ through Gₙ₋₁, when the values of the n output bits Do₀ through Doₙ₋₁ of the m×n decoder 100 are "0". The XOR gates G₀ through Gₙ₋₁ perform XOR operations with respect to the outputs S₀ through Sₙ₋₁ of the multiplexers m₀ through mₙ₋₁ and the outputs S₀ through Sₙ₋₁ of the registers r₀ through rₙ₋₁. Finally, the output of each of the XOR gates G₀ through Gₙ₋₁ becomes "0", so there are no values to be fed back to the least significant register r₀.

The n registers r₀ through rₙ₋₁ generate n-bit random data, and the XOR gates 101 through 108 provide the scrambling results of XOR operations performed on input data D₀ through D₇ and the outputs of the 8 lower registers r₀ through r₇.

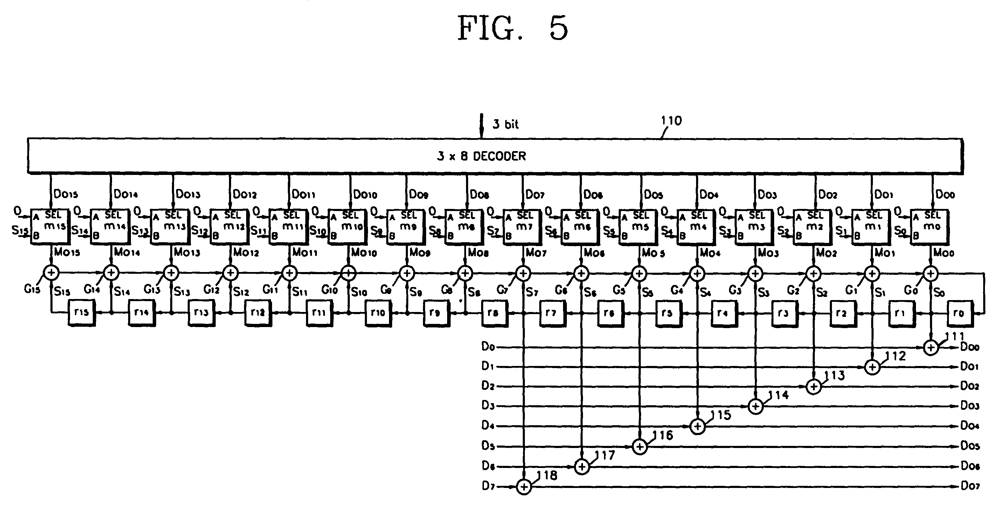

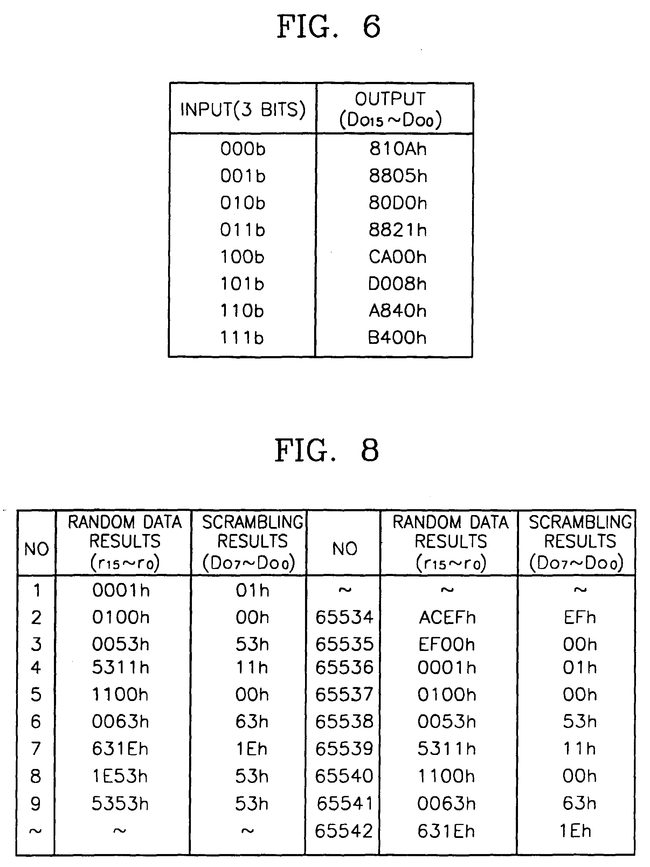

Figure 5 is a circuit diagram of an embodiment of the random data generator and the scrambler using the same shown in Figure 4. Here, the input to a 3×8 decoder 110 is set to be 3 bits, and the output therefrom is set to be 16 bits Do₀ through Do₁₅ which are classified into 8 types. An example of the outputs according to the inputs of the 3×8 decoder 110 is shown in Figure 6.

If 3 bits having a value "100b" are received, the output value of the 3×8 decoder 110 is "CA00h" as shown in Figure 6. Accordingly, only the outputs Do₉, Do₁₁, Do₁₄ and Do₁₅ of the 3×8 decoder 110 are "1", so the outputs Mo₉, Mo₁₁, Mo₁₄ and Mo₁₅ of the multiplexers m₉, m₁₁, m₁₄ and m₁₅ become "0". Hence, the XOR gates G₉, G₁₁, G₁₄ and G₁₅ provide the outputs S₉, S₁₁, S₁₄ and S₁₅ of the corresponding registers r₉, r₁₁, r₁₄ and r₁₅, received via the other side of each of the XOR gates G₉, G₁₁, G₁₄ and G₁₅, as their outputs, so that the output values of the upper XOR gates G₉, G₁₁, G₁₄ and G₁₅ are valid. The outputs of the remaining multiplexers m₀,..., m₈, m₁₀, m₁₂ and m₁₃ are the outputs S₀,..., S₈, S₁₀, S₁₂ and S₁₃ of the registers r₀,..., r₈, r₁₀, r₁₂ and r₁₃, so that the corresponding XOR gates G₀,..., G₈, G₁₀, G₁₂ and G₁₃ perform XOR operations with respect to the outputs S₀,..., S₈, S₁₀, S₁₂ and S₁₃ of the multiplexers m₀, ..., m₈, m₁₀, m₁₂ and m₁₃, each of which is received via one side of each of the corresponding XOR gates, and the outputs S₀,..., S₈, S₁₀, S₁₂ and S₁₃ of the registers r₀, ..., r₈, r₁₀, r₁₂ and r₁₃, each of which is received via the other end of each of the XOR gates G₀,..., G₈, G₁₀, G₁₂ and G₁₃. The output values of the XOR gates G₁,..., G₉, G₁₁, G₁₃ and G₁₄ become "0".

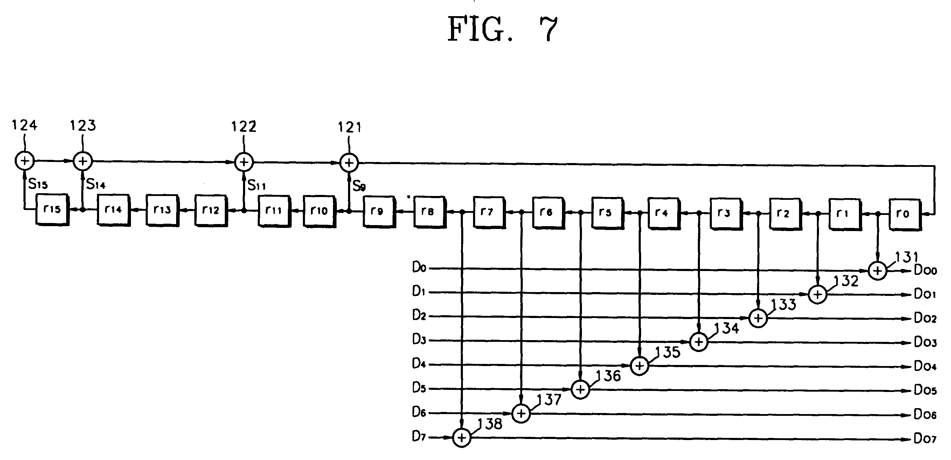

For example, in the case of the multiplexer m₁₃, the output Do₁₃ of the 3×8 decoder 110 is "0", so that the output S₁₃ of the register r₁₃ received via the second input port B is provided as its output Mo₁₃. Finally, the XOR gate G₁₃ performs a XOR operation with respect to the two data S₁₃ and S₁₃ and outputs "0", which means that the branches S₁₃ and Mo₁₃ of the XOR gate G₁₃ become invalid. Consequently, the random data generator and the scrambler using the same shown in Figure 5 can have the structure shown in Figure 7 if they are realized in a simple structure with respect to the output value "CA00h" of the 3×8 decoder 110.

As shown in Figure 7, when the output value of the 3×8 decoder 110 shown in Figure 5 is "CA00h", the registers r₀ through r₁₅ are shifted left eight times, and then random data is extracted. In this case, the random data of the registers r₀ through r₁₅ is as shown in Figure 8, and it becomes evident that a cycle is 64K (65536).

The valid branches of the XOR gates G₀ through G₁₅ in the random data generator vary with the outputs of the 3×8 decoder 110 shown in Figure 5, which changes the structure of the random data generator. Accordingly, generation of random data having a 8×64K cycle is enabled. This means that a random data generator for a long period can be realized with a structure of a type shown in Figure 5 without limit. If the values of the 3×8 decoder 110 capable of generating random data having a 64K cycle are arranged in the structure shown in Figure 5, tables of Figures 9 and 10 are obtained.

Figure 9 is a table showing branch values in all possible cases, that is, the outputs Do₀ through Do₁₅ of the 3×8 decoder 110, when the number of XOR gates having effective branches of the XOR gates G₀ through G₁₅ in the random data generator shown in Figure 5 is four. Figure 10 is a table showing branch values in all possible cases, that is, the outputs Do₀ through Do₁₅ of the 3×8 decoder 110, when the number of XOR gates having effective branches of the XOR gates G₀ through G₁₅ in the random data generator shown in Figure 5 is six. There may be the cases that the number of effective branches is 8, 10 or 12.

Thus, the cycle of random data is set to be 64K as an embodiment of the present invention, branch values capable of realizing this embodiment are proposed, and an m×n decoder is provided as shown in Figure 4 so as to extend the cycle of random data to 2^{m}×64K.

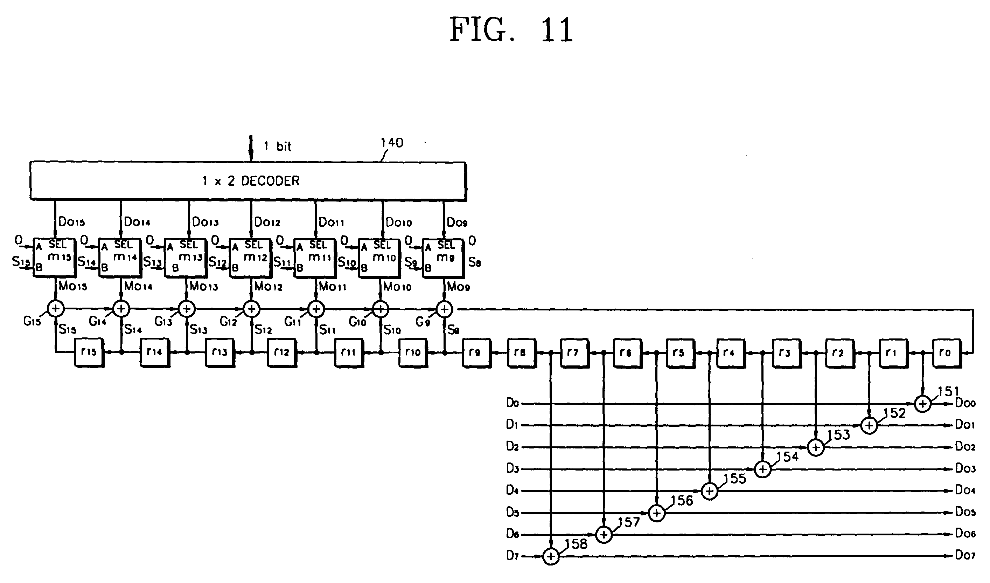

A circuit diagram of another embodiment of the random data generator shown in Figure 4 and a scrambler using the random data generator is shown in Figure 11. Figure 11 intends to propose a device for generating random data having a long cycle, which has a hardware structure that is as simple as possible.

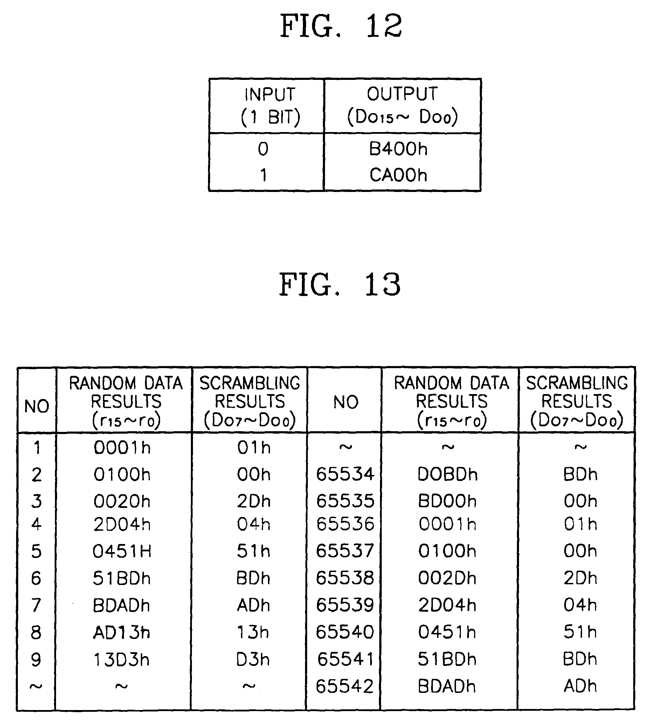

In Figure 11, "B400h" and "CA00h" having as many common parts as possible, among branch structures capable of a 64K random data cycle, are selected, and the contents of a 1×2 decoder 140 is shown in Figure 12. Branches corresponding to the outputs Do₀ through Do₈, which are commonly 0, of the 1×2 decoder 140 are all removed.

If one bit "0b" is applied to the 1×2 decoder 140, the output of the 1×2 decoder 140 becomes "B400h", and thus branches Do₁₄, Do₁₁ and Do₉ become invalid. Random data results provided from registers r₀ through r₁₅, and scrambling results provided from XOR gates 151 through 158 when 8 bits of input data Do₀ through Do₇ are "00h", are arranged in a table and shown in Figure 13.

Hence, the table shown in Figure 13 has random data extracted whenever the registers r₀ through r₁₅ are shifted left eight times, and indicates that one cycle is 64K (65536). Consequently, the results Do₀ through Do₇ obtained by scrambling the input data D₀ through D₇ become data intended to be finally used.

On the other hand, if one bit "1b" is applied to the 1×2 decoder 140 shown in Figure 11, the output of the 1×2 decoder 140 becomes "CA00h". Random data results provided from registers r₀ through r₁₅, and scrambling results provided from XOR gates 151 through 158 when 8 bits of input data D₀ through D₇ are "00h", are the same as the contents of Figure 8.

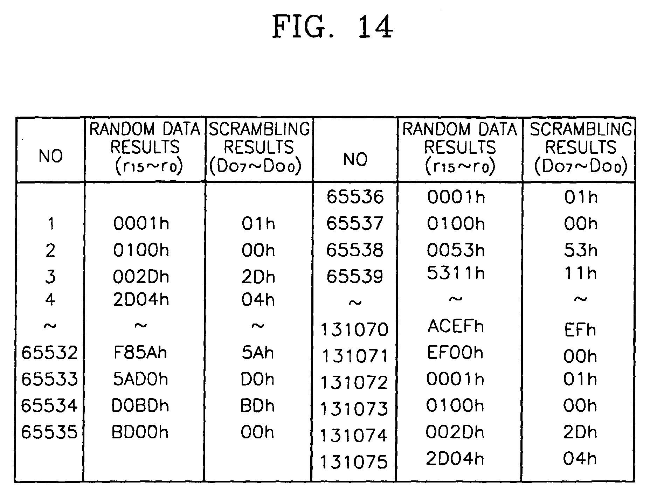

Thus, the results of random data that can be obtained by the structure shown in Figure 11, and the results of scrambling of input data "00h", are arranged in a table and shown in Figure 14. Here, the cycle can be simply extended to 2×64K.

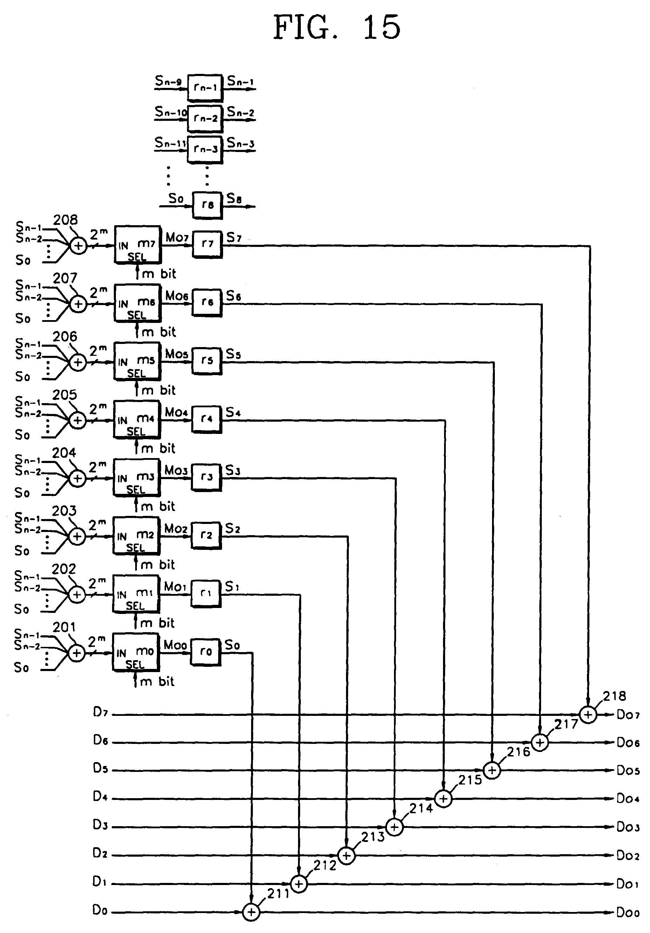

Figure 15 shows a random data generator having a parallel structure according to the present invention and a scrambler using the random data generator. The structures of the random data generator and the scrambler are preferable for systems requiring high-speed signal processing.

In the structure shown in Figure 15, the results shifted left eight times are directly applied to each of the registers r₀ through rₙ₋₁ in parallel, so that the outputs S₀ through Sₙ₋₁₋₈ of the registers r₀ through rₙ₋₁₋₈ are applied to upper registers r₈ through rₙ₋₁. The input of the lower registers r₀ through r₇ depends on which branch structure is selected among the branch structures shown in Figure s 9 and 10. Also, the number of lower registers r₀ through r₇ shown is 8, but can vary with an input data bit (p).

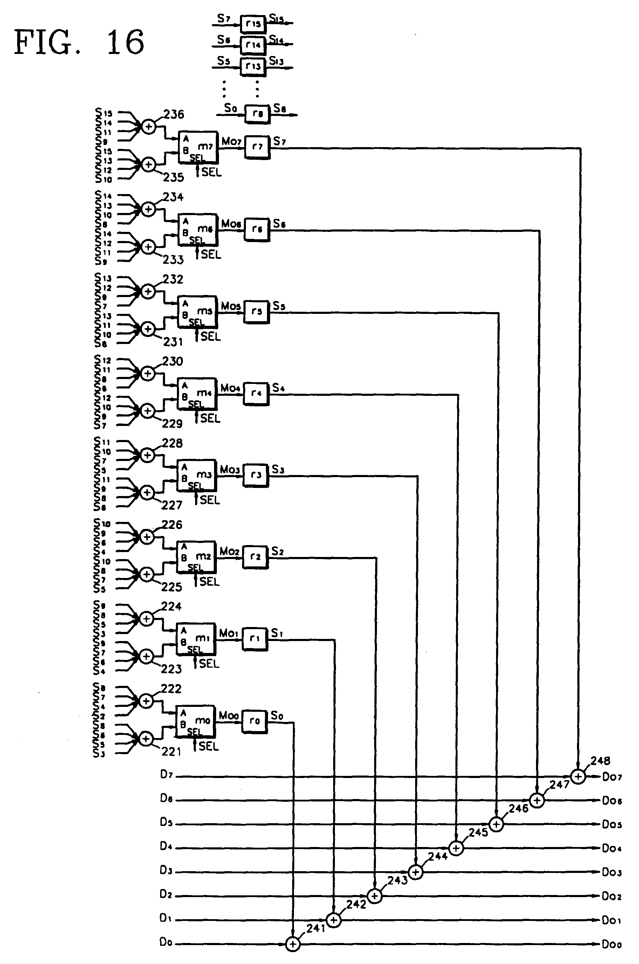

Multiplexers m₀ through m₇ each select one input among 2^{m} inputs provided via XOR gates 201 through 208 according to m-bit selection signals, and provide the selected input to corresponding registers r₀ through r₇. Here, the XOR gates 201 through 208 are a combination of several XOR gates. A circuit diagram of another embodiment of the serial-type random data generator and the scrambler using the same shown in Figure 11, that is, a transformation of a serial type random data generator and a scrambler using the same into a parallel type, is shown in Figure 16.

In Figure 16, when a selection signal SEL of each of the multiplexers m₀ through m₇ corresponding to the output "CA00h" of the 1×2 decoder 140 shown in Figure 11 is "1", the same contents as the contents of the registers r₀ through r₁₅ which were shifted left eight times in Figure 11 are applied in parallel as follows.

That is, the outputs S₀ through S₇ of the registers r₀ through r₇ are input to the registers r₈ through r₁₅ arranged in parallel, respectively, and the results of (S₈⊕S₇⊕S₄⊕S₂), (S₉⊕S₈⊕S₅⊕S₃), (S₁₀⊕S₉⊕S₆⊕S₄), (S₁₁⊕S₁₀⊕S₇⊕S₅), (S₁₂⊕S₁₁⊕S₈⊕S₆), (S₁₃⊕S₁₂⊕S₉⊕S₇), (S₁₄⊕S₁₃⊕S₁₀⊕S₈) and (S₁₅⊕S₁₄⊕S₁₁⊕S₉) are applied to the registers r₀ through r₇ via the first input port A of each of the multiplexers m₀ through m₇, respectively.

Also, when the selection signal SEL of each of the multiplexers m₀ through m₇ corresponding to the output "B400h" of the 1×2 decoder 140 shown in Figure 11 is "0", the outputs S₀ through S₇ of the registers r₀ through r₇ are input to the registers r₈ through r₁₅, respectively, and the results of (S₈⊕S₆⊕S₅⊕S₃), (S₉⊕S₇⊕S₆⊕S₄), (S₁₀⊕S₈⊕S₇⊕S₅), (S₁₁⊕S₉⊕S₈⊕S₆), (S₁₂⊕S₁₀⊕S₉⊕S₇), (S₁₃⊕S₁₁⊕S₁₀⊕S₈), (S₁₄⊕S₁₂⊕S₁₁⊕S₉) and (S₁₅⊕S₁₃⊕S₁₂⊕S₁₀) are applied to the registers r₀ through r₇ via the second input port B of each of the multiplexers m₀ through m₇, respectively.

The random data results provided from the registers r₀ through r₁₅, and the scrambling results Do₀ through Do₇ when the input data D₀ through D₇ provided from the XOR gates 241 through 248 are "00b", are the same as those shown in a table of Figure 14.

In the serial structure shown in Figure 11, random data results and scrambling results are obtained after shifting each of the registers r₀ through r₁₅ left eight times, and a scramble clock signal provided to each of the registers r₀ through r₁₅ must be eight times as fast as a data clock signal provided to the XOR gates 151 through 158. Whereas, in the parallel structure of Figure 16, the same results as those shown in Figure 11 can be obtained even with one shift, a scramble clock signal provided to each of the registers r₀ through r₁₅ is as fast as a data clock signal provided to the XOR gates 241 through 248, and a scramble clock signal having the same speed as the speed of the data clock signal of the serial structure can be used.

Accordingly, the serial structure shown in Figure 11 is simpler than a parallel structure, but may have a disadvantage in that it must operate fast. The parallel structure shown in Figure 16 operates at a speed of 1/8 of the operating speed of the serial structure, but may have a disadvantage in that the circuit is a little complicated. Thus, they can be selected according to the circumstances.

According to the present invention, random data having a cycle of 64K or greater can be generated, and a random data generator for 2^{m}×64K can be realized with a m×n decoder. Also, embodiments of the present invention can be used as a random data generator for a scrambler of a high-capacity optical disc system such as an anticipated high density (HD)-DVD.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extend to any novel one, or any novel combination, of the features disclosed in this specification (including any accompanying claims, abstract and drawings), or to any novel one, or any novel combination, of the steps of any method or process so disclosed.

## Claims

1. A random data generator comprising:
a m×n decoder (100) for receiving m bits and outputting n bits;
registers (r₀-rₙ₋₁) arranged in series for shifting and storing the n bits;
selection output circuits (m₀-mₙ₋₁) for receiving n bits of output from the m×n decoder (100) as selection signals, and providing "0" with respect to valid bits among the n bits of output from the m×n decoder (100) and providing the outputs of the registers (r₀-rₙ₋₁) with respect to invalid bits; and
logic circuits (G₀-Gₙ₋₁) for performing XOR operations with respect to the n bits of output from the selection output circuits (m₀-mₙ₋₁) and the n bits of output from the registers (r₀-rₙ₋₁), and feeding the results of the XOR operations back to a least significant register (r₀) only in the case of valid bits among the n bits of output from the m×n decoder (100),
wherein n bits of random data are generated from the registers (r₀-rₙ₋₁).

2. The random data generator of claim 1, wherein the m×n decoder (100) outputs 2^{m} types of n bits with respect to the m input bits, thereby extending the cycle of the random data to 2^{m} times.

3. The random data generator of claim 1, wherein when n in the m×n decoder (100) is set to be 16 and a predetermined branch value is selected, the cycle of the random data becomes 2¹⁶ (=64K).

4. The random data generator of claim 1, wherein, when m-bit selection signals are received and n is set to be 16, the m×n decoder (100) becomes a m×16 decoder, and the cycle of the random data is 2^{m}×64K.

5. The random data generator of claim 1, wherein the m×n decoder (100) is a 3×8 decoder, and the cycle of random data is 8×64K.

6. The random data generator of claim 1, wherein the m×n decoder (100) is a 1×2 decoder, and the cycle of random data is 2×64K.

7. The random data generator of claim 1, wherein the number of effective branches of the outputs of the m×n decoder is 4 or more.

8. The random data generator of claim 7, wherein when the number decoder is a 3x8 decoder (110) having outputs (Dₒ₀-Dₒ₁₅) and four effective branches the branch values related to the decoder outputs are as given in the table below:
| NO | BRANCH VALUE (Dₒ₁₅-Dₒ₀) | NO | BRANCH VALUE (Dₒ₁₅-Dₒ₀) |
|---|---|---|---|
| 1 | 8016h | 27 | 8940h |
| 2 | 801Ch | 28 | 8A04h |
| 3 | 8029h | 29 | 9028h |
| 4 | 80D0h | 30 | 9082h |
| 5 | 810Ah | 31 | 9120h |
| 6 | 8112h | 32 | 9420h |
| 7 | 8112h | 33 | 9840h |
| 8 | 8142h | 34 | 9C00h |
| 9 | 8148h | 35 | A084h |
| 10 | 8150h | 36 | A108h |
| 11 | 8214H | 37 | A140h |
| 12 | 8241H | 38 | A440h |
| 13 | 8244H | 39 | A801h |
| 14 | 8248H | 40 | A840h |
| 15 | 8260H | 41 | B010h |
| 16 | 8320H | 42 | B400h |
| 17 | 8406H | 43 | C009h |
| 18 | 8430H | 44 | C00Ah |
| 19 | 8540H | 45 | C042h |
| 20 | 8580H | 46 | C108h |
| 21 | 8610H | 47 | C120h |
| 22 | 8805H | 48 | C208h |
| 23 | 8821H | 49 | C801h |
| 24 | 8841H | 50 | CA00h |
| 25 | 8842H | 51 | DA00h |
| 26 | 8920H | 52 | D008h |

9. The random generator of claim 7 wherein when the decoder is a 3x8 decoder (110) having outputs (Dₒ₀-Dₒ₁₅) and six effective branches, the branch values related to the decoder outputs being as given in the table below:

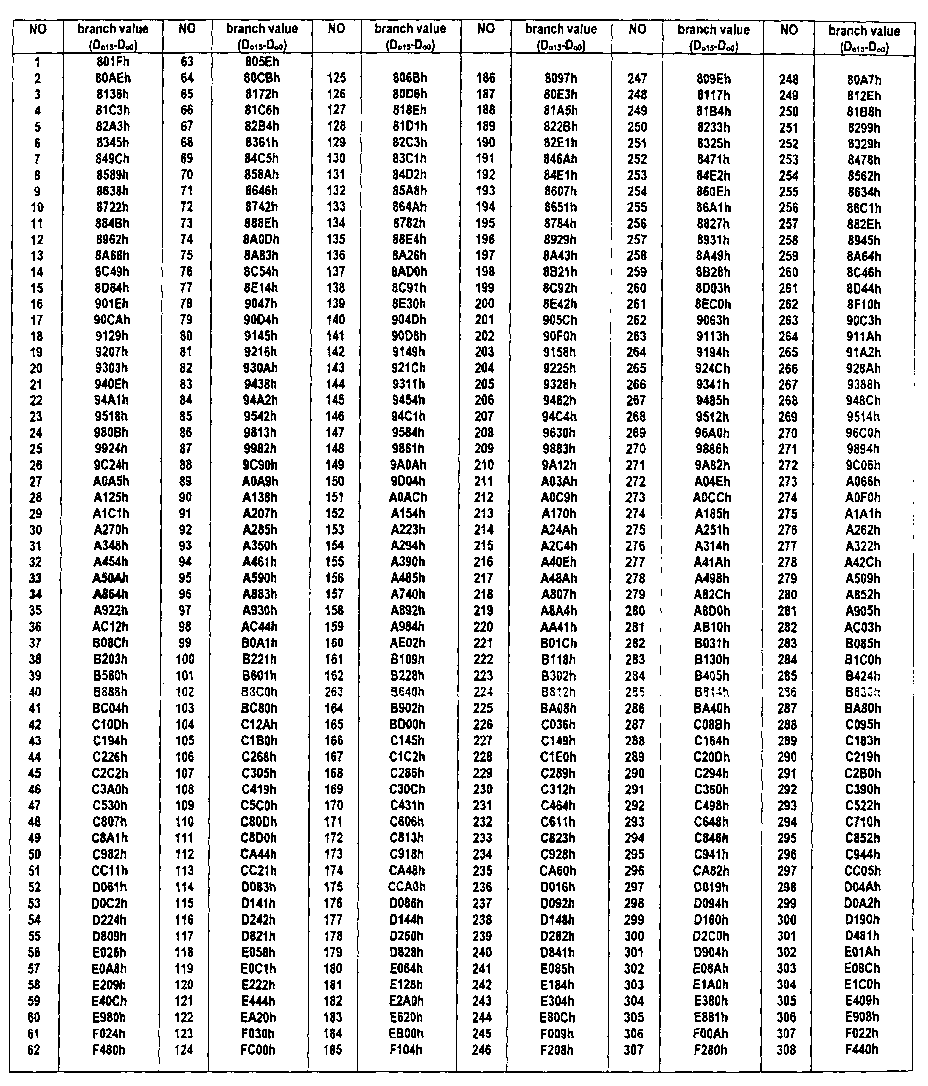

10. The random data generator of any preceding claim, wherein the random data generator is applied to a scrambler of an optical disc system, and the scrambler comprises a random data generator and a predetermined number of logic gates for performing XOR operations with respect to input data and the outputs of as many lower registers as the predetermined number of logic gates to provide scrambling results.

11. A random data generator comprising:
n registers (r₀-rₙ₋₁) arranged in series for shifting and storing n bits;
logic circuits (G₀-Gₙ₋₁) arranged in series, which are realized with a plurality of logic gates, for performing XOR operations with respect to the outputs of the registers (r₀-rₙ₋₁), which are valid corresponding to the number of logic gates having effective branches according to a predetermined branch value, and the outputs of adjacent logic gates, and feeding the results of the XOR operation back to a least significant register (r₀),
wherein n bits of random data are generated from the registers.

12. The random data generator of claim 11, wherein the number of effective branches is 4 or more, and it is determined by the branch values shown in Figures 9 and 10.

13. The random data generator of claim 11, wherein when n is set to be 16, the cycle of the random data becomes 2¹⁶ (=64K).

14. The random data generator of claim 11, wherein the random data generator is applied to a scrambler of an optical disc system, and the scrambler comprises a random data generator and a predetermined number of logic gates for performing XOR operations with respect to input data and the outputs of as many lower registers as the predetermined number of logic gates to provide scrambling results.

15. A random data generator comprising:
p logic circuits (201-208) arranged in parallel, for receiving the outputs of n registers in parallel, performing XOR operations with respect to the outputs of the n registers which correspond to the results of n left-shifting operations having correspondence to the number of effective branches according to a predetermined branch value, and providing 2^{m} outputs;
selection output circuits (m₀-m₇), each for selecting one output among 2^{m} outputs provided from each of the logic circuits according to m-bit selection signals, and providing p outputs; and
n registers (S₀-S₇) arranged in parallel for generating random data, wherein (n-p) upper registers receive the outputs of p lower registers and the p lower registers receive the p outputs of the selection output circuit,
wherein the outputs of registers (S₀-S₇) corresponding to the number of effective branches having a predetermined branch value are fed back to the logic circuit.

16. The random data generator of claim 15, wherein the cycle of random data provided from the registers is extended to 2^{m} times.

17. The random data generator of claim 15, wherein when m-bit selection signals are received and n is set to be 16, the cycle of random data provided from the registers becomes 2^{m}×64K.

18. The random data generator of claim 15, wherein the inputs (Sₒ₀-Sₒ₁₅) of the p lower registers correspond to the values (Dₒ₀-Dₒ₁₅) and have branch values shown in the table below:
| NO | BRANCH VALUE (Dₒ₁₅-Dₒ₀) | NO | BRANCH VALUE (Dₒ₁₅-Dₒ₀) |
|---|---|---|---|
| 1 | 8016h | 27 | 8940h |
| 2 | 801Ch | 28 | 8A04h |
| 3 | 8029h | 29 | 9028h |
| 4 | 80D0h | 30 | 9082h |
| 5 | 810Ah | 31 | 9120h |
| 6 | 8112h | 32 | 9420h |
| 7 | 8112h | 33 | 9840h |
| 8 | 8142h | 34 | 9C00h |
| 9 | 8148h | 35 | A084h |
| 10 | 8150h | 36 | A108h |
| 11 | 8214H | 37 | A140h |
| 12 | 8241H | 38 | A440h |
| 13 | 8244H | 39 | A801h |
| 14 | 8248H | 40 | A840h |
| 15 | 8260H | 41 | B010h |
| 16 | 8320H | 42 | B400h |
| 17 | 8406H | 43 | C009h |
| 18 | 8430H | 44 | C00Ah |
| 19 | 8540H | 45 | C042h |
| 20 | 8580H | 46 | C108h |
| 21 | 8610H | 47 | C120h |
| 22 | 8805H | 48 | C208h |
| 23 | 8821H | 49 | C801h |
| 24 | 8841H | 50 | CA00h |
| 25 | 8842H | 51 | DA00h |
| 26 | 8920H | 52 | D008h |

19. The random data generator of claim 15, wherein the inputs (Sₒ₀-Sₒ₁₅) of the p lower registers correspond to the values (Dₒ₀-Dₒ₁₅) and have branch values shown in the table below:

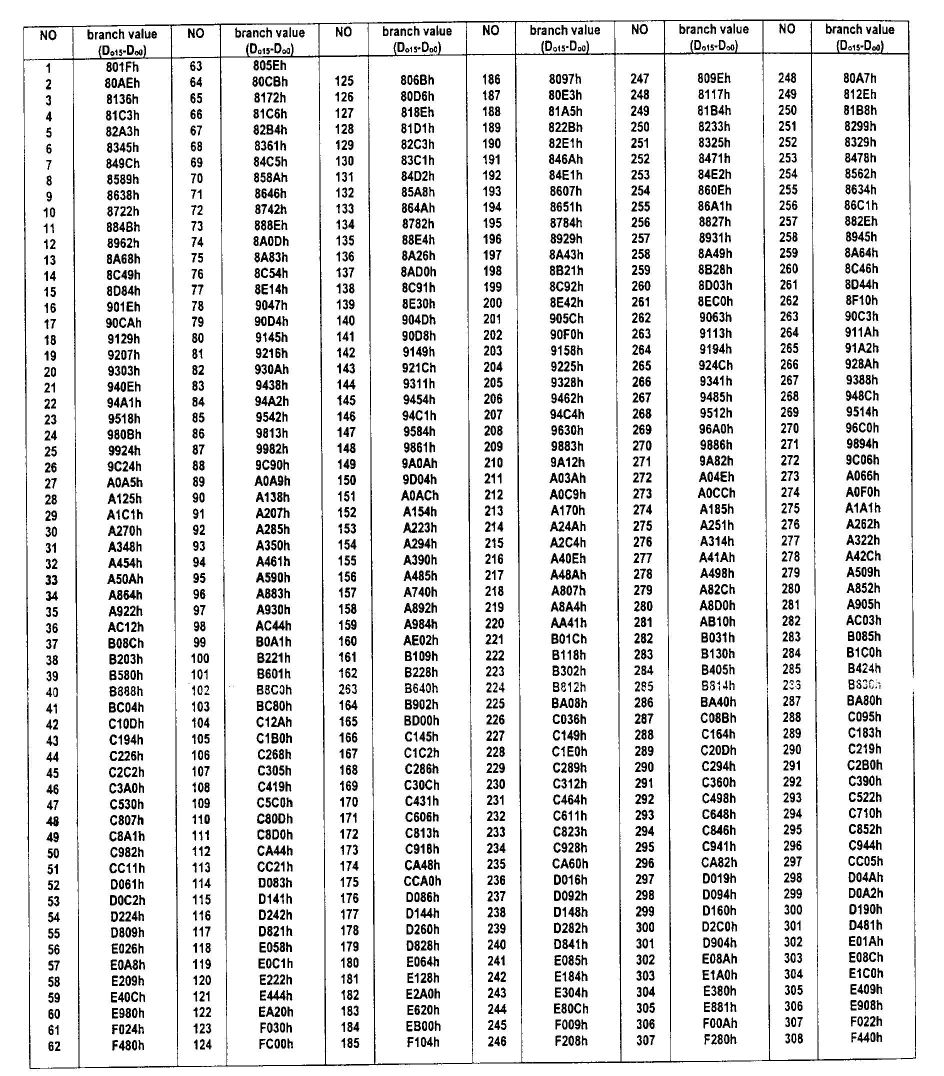

20. The random data generator of claim 15, wherein the logic circuits are 8×2³ XOR gates, and the selection output circuits select 8 outputs provided from the logic circuits using 3 bit selection signals and provide the selected data to 8 lower registers, while the remaining upper registers receive the outputs of the 8 lower registers.

21. The random data generator of claim 15, wherein the random data generator is applied to a scrambler of an optical disc system, and the scrambler comprises a random data generator and a predetermined number of logic gates for performing XOR operations with respect to input data and the outputs of as many lower registers as the predetermined number of logic gates to provide scrambling results.
